# DEMANDE DE BREVET EUROPEEN

(11) **EP 2 075 751 A1**
(43) Date de publication de la demande: **01.07.2009**
(21) Numéro de dépôt: 07301685.9
(22) Date de dépôt: 17.12.2007
(51) Int. Cl.: G06Q 20/00, G07G 1/14

(54) **Procédé pour communiquer depuis un terminal de transaction à un serveur, terminal, serveur et système électroniques correspondants**

(71) Demandeur: Axalto S.A., 92190 Meudon (FR)
(72) Inventeur: Mengus, Jean-Paul, 92190 Meudon (FR)

(57) **Abrégé**

L'invention concerne un procédé pour communiquer, depuis un terminal (11) de transaction électronique d'un utilisateur, en tant que client, avec au moins un serveur (13) d'application, **caractérisé en ce qu**'il met en oeuvre :
- un terminal de transaction électronique apte à être relié à un terminal relais (12) via des moyens de communication (24) d'un réseau personnel local, le terminal relais comportant des moyens de communication pour communiquer avec un serveur d'application via un réseau public ou privé,
- et en ce qu'il comporte une étape de transmission d'au moins un identifiant du terminal et/ou utilisateur associé à chaque communication de manière à initialiser et/ou gérer les communications/transactions dans le serveur (13).

L'invention concerne également le terminal de transaction électronique 11, le dispositif serveur 13, et le système comprenant le terminal de transaction électronique 11, le terminal 12 relais et le dispositif serveur 13.

## Description

### Domaine technique de l'invention :

L'invention concerne, d'une façon générale, un procédé pour communiquer, depuis un terminal de transaction électronique, en tant que client, avec au moins un serveur d'application. La communication permet d'accéder au serveur ou permet d'effectuer une transaction ou session de communication avec le serveur.

L'invention porte également sur un tel terminal de transaction électronique permettant d'accéder à au moins un serveur d'application.

L'invention est, en outre, relative à un dispositif électronique comportant au moins un tel serveur d'application.

L'invention a trait, enfin, à un système pour accéder, depuis un tel terminal de transaction électronique, en tant que client, à au moins un tel serveur d'application.

Il faut entendre dans le présent document de brevet par l'expression suivante « serveur d'application » ou serveur, un dispositif électronique comprenant des moyens de traitement et de contrôle de données et des moyens de mémorisation mémorisant au moins un programme informatique applicatif, ou application, accessible depuis l'extérieur.

Un accès, depuis un terminal de transaction électronique, au serveur d'application permet, à ce dernier, d'effectuer un traitement propre à l'application à exécuter.
Par terminal de transaction électronique, il faut comprendre tout dispositif électronique comportant des moyens de communication de données avec l'extérieur.

### Etat de la technique :

II est connu, par exemple, d'utiliser, pour une application de paiement bancaire, en tant que terminal de transaction électronique client, un terminal connecté, au travers d'un réseau de téléphonie mobile, à un serveur d'autorisation de transaction bancaire. Le serveur d'autorisation de transaction bancaire est désigné infra par l'expression « serveur d'autorisation ».

Le terminal est utilisé par un commerçant.

Pour effectuer une transaction bancaire, le terminal mémorise, des données bancaires propres au commerçant, l'application de paiement bancaire et est adapté pour l'exécuter. Le terminal est équipé d'un écran d'affichage d'informations, d'un clavier pour entrer des données, d'une interface de communication à un réseau public de radiotéléphonie connecté au serveur d'autorisation, d'un premier et d'un deuxième lecteurs de carte à puce, et d'un lecteur de piste magnétique.

Le premier lecteur de carte à puce et le lecteur de piste magnétique sont destinés à récupérer des données bancaires d'un acheteur depuis sa carte bancaire. Le deuxième lecteur de carte à puce est prévu pour accéder à une carte à puce de type carte SIM (acronyme pour « Subscriber Identity Module » en langue anglaise), personnalisée avec des données propres à l'utilisateur du terminal. La carte SIM est adaptée pour communiquer, au travers du réseau de radiotéléphonie mobile, pour le compte de l'utilisateur, avec le serveur d'autorisation.

Le commerçant, utilisateur du terminal, souhaitant vendre un produit (ou un service) lance l'application de paiement bancaire depuis le clavier. Puis, le terminal récupère les données bancaires propres au commerçant mémorisées. Ensuite, le commerçant saisit au clavier un montant du produit.

La carte bancaire de l'acheteur désirant le produit (ou un service) et payant au moyen d'une carte bancaire à puce ou à piste magnétique est passée dans le lecteur à puce ou à piste magnétique du terminal.

Le terminal récupère et enregistre les données bancaires propres à l'acheteur.

Une fois les données de la transaction propre à l'application de « paiement bancaire » récupérées et un traitement effectué par l'application, le terminal transmet, éventuellement, via le réseau de radiotéléphonie, au serveur d'autorisation, une demande d'autorisation. Le serveur d'autorisation autorise ou interdit la transaction de paiement bancaire, depuis le compte bancaire de l'acheteur, en transmettant au terminal, en retour, une réponse correspondante.

Cependant, une telle solution connue présente certains inconvénients majeurs.

En effet, une telle solution basée sur l'utilisation d'un équipement adapté, en tant que terminal, pour se connecter à un réseau de radiotéléphonie. Un tel équipement nécessite de personnaliser, à cette fin, lors de sa fabrication, le terminal d'un utilisateur, pour pouvoir se connecter au travers d'un réseau de radiotéléphonie et effectuer une transaction avec le serveur.

Une telle personnalisation consiste, d'une part, à pourvoir le terminal de moyens pour communiquer de manière distante via le réseau de radiotéléphonie pour échanger avec le serveur, et d'autre part, à charger une application prédéterminée qu'il stocke pour son exécution, ainsi que des données propres à son utilisateur. Ainsi, une telle personnalisation revêtant les deux aspects matériel et logiciel est longue et coûteuse à mettre en oeuvre.

De plus, il résulte, d'une telle personnalisation du terminal, un terminal nécessitant de moyens de communication à distance et d'une mémoire de type non volatile de capacité importante pour stocker l'application prédéterminée et les données propres à son utilisateur, encombrant et long à produire.

De surcroît, une telle solution est mal adaptée, et donc trop onéreuse pour s'adresser, par exemple, à un service de commerce mobile, pour pouvoir effectuer un faible nombre de transactions entre le terminal et le serveur.

### Exposé de I'invention :

L'invention s'affranchit des inconvénients majeurs précédemment énoncés en fournissant un procédé pour communiquer, depuis un terminal de transaction électronique, avec au moins un ou plusieurs serveurs d'application La communication permet d'accéder au serveur ou permet d'effectuer une transaction ou session de communication avec le serveur.

Le principe général de l'invention repose sur une nouvelle approche où l'architecture utilisée pour l'initialisation d'une transaction ou pour la mettre en oeuvre entre un terminal client de transaction et le serveur intègre un terminal relayant la communication, dit terminal relais, entre le terminal client et le serveur. Pour ce faire, le terminal client et le terminal relais sont adaptés pour communiquer, entre eux, de préférence, de manière locale.

Au moins un identifiant du terminal de transaction et/ou utilisateur associé à chaque communication/transaction ou session de communication permet d'initialiser et/ou gérer les communications / transactions dans le serveur ou base associée.

Plus particulièrement, l'invention est un procédé pour accéder à au moins un serveur d'application, depuis un terminal de transaction électronique client. Selon l'invention, le terminal de transaction électronique est relié, au travers de moyens de communication à un réseau personnel, à un terminal relais, les moyens de communication à un réseau personnel permettant au terminal de transaction électronique de communiquer, de manière locale, avec le terminal relais, le terminal relais comportant des moyens de communication au réseau personnel et des moyens de communication à un réseau public ou privé.

Selon un mode de mise en oeuvre préféré, le procédé comporte une phase d'initialisation d'une transaction, au travers du terminal relais, entre le terminal de transaction électronique et le serveur d'application, la phase d'initialisation d'une transaction comprenant une étape de récupération d'au moins un élément d'identification prédéterminé d'un utilisateur du terminal de transaction électronique et/ou d'un identifiant de terminal qui lui est associé notamment dans le serveur distant. La récupération peut s'effectuer à la mise en route du terminal via un programme adapté puis transmis au serveur distant d'application.

Toutefois, l'identifiant lié ou associé à la transaction peut être au préalable également crée dans une étape d'initialisation dans une base d'un serveur distant pour identification et gestion ultérieure.

Ainsi, le terminal client, à la différence de la solution de l'art antérieur explicitée supra, ne nécessite pas de moyens de communication avec le réseau public de radiotéléphonie mobile, encore dits moyens de communication à distance ou de longue portée, le réseau public étant connecté avec le serveur. En effet, le terminal client nécessite de simples moyens de communication à un réseau personnel, encore appelés moyens de communication de proximité ou en local ou de faible portée, reliant le terminal client au terminal relais, pour communiquer, au travers du terminal relais, avec le serveur.

Le fait que le terminal client communique, en local, avec le terminal relais permet d'assurer une certaine sécurité dans la communication limitant la fraude. Ainsi, un tiers non impliqué peut difficilement venir écouter la communication entre le terminal client et le terminal relais.

C'est le terminal relais qui comporte les moyens de communication à distance qui permet de relier, de manière transparente, le terminal client au serveur.

Par conséquent, par rapport à la solution connue décrite plus haut, l'architecture utilisée déporte l'utilisation de moyens de communication à distance depuis le terminal client vers un terminal relais dont on utilise les ressources disponibles. Un tel terminal relais est à interposer entre le terminal client et le serveur.

En tant que terminal relais, il peut s'agir d'un téléphone mobile, d'un assistant numérique personnel (ou PDA acronyme pour « Personal Digital Assistant » en langue anglaise), ou d'un ordinateur personnel (ou PC acronyme pour « Personal Computer » en langue anglaise) relié par voie radiofréquence et/ou par voie filaire au serveur.

Une fois la transaction initialisée entre le terminal client et le serveur, il n'est plus besoin de fournir les données d'identification d'un même utilisateur depuis le terminal client au serveur. En d'autres termes, pour une deuxième connexion, la communication propre à la transaction liant l'utilisateur du terminal client et le serveur est alors automatisée, c'est-à-dire sans intervention de l'utilisateur déjà enregistré.

Selon un autre aspect, l'invention est un terminal de transaction électronique client permettant d'accéder à au moins un serveur d'application.

Plus particulièrement, selon l'invention, le terminal de transaction électronique comporte des moyens pour communiquer, de manière locale, au travers d'un réseau personnel, avec l'extérieur. En outre, le terminal de transaction électronique comporte des moyens pour récupérer et transmettre au moins un élément d'identification prédéterminé d'un utilisateur du terminal de transaction électronique, de façon à initialiser une transaction, au travers du réseau personnel, avec le serveur d'application.

On comprend qu'il résulte de l'utilisation, non pas de moyens de communication à distance, mais de moyens de communication de proximité, au sein du terminal client, une réduction de l'encombrement du terminal client nécessaire par rapport à celui de la solution connue décrite plus haut.

En outre, le terminal client utilisé, contrairement à celui de l'art antérieur, ne nécessite point de personnalisation après sa fabrication. En effet, il suffit, avant d'effectuer une première transaction électronique avec le serveur, d'initialiser la transaction entre le serveur et le terminal client, lors de sa première mise en route.

De ce fait, le terminal client offre un encombrement réduit, est donc plus ergonomique et plus confortable à utiliser que celui de l'art antérieur.

C'est le terminal client qui fournit au serveur un élément prédéterminé permettant d'identifier un utilisateur, tel qu'un commerçant par exemple, pour initialiser la transaction avec le serveur.

On comprend que le terminal client qui est, à l'initiative, de l'initialisation de la transaction avec le serveur, puisque le terminal client fournit les données au serveur.

Il convient de noter que l'invention n'impose aucune contrainte quant à la nature de la transaction. En d'autres termes, le terminal de l'invention peut être utilisé pour tout type de transaction.

Il convient de noter que l'invention n'impose aucune contrainte sur la façon de fournir au terminal client « l'élément prédéterminé d'identification d'un utilisateur ». Il peut notamment s'agir d'une saisie, par un utilisateur, à un clavier d'un terminal client ainsi équipé, ou bien d'une entrée vocale, par un utilisateur, au travers d'un microphone d'un terminal client ainsi pourvu, de l'élément ou de plusieurs éléments l'identifiant.

En tant que terminal client, il peut revêtir de multiples formes. Il peut consister, par exemple, en un « dongle » muni d'une interface de communication sans contact de proximité (de type radiofréquence, par exemple de type Bluetooth, NFC (acronyme pour « Near Field Communication » en langue anglaise), infra rouge ou IR (acronyme pour « Infra Red » en langue anglaise) et/ou muni d'une interface de communication à contact, par exemple de type USB (acronyme pour « Universal Serial Bus » en langue anglaise), SD (acronyme pour « Secure Digital » en langue anglaise) ou MMC (acronyme pour « Multi-Media Card » en langue anglaise).

Un tel terminal client peut être qualifié de basique, en ce sens, qu'il ne nécessite aucune personnalisation particulière, si ce n'est qu'il doit être pourvu de moyens de communication de proximité.

Un tel terminal client «basique » ne nécessitant pas d'adaptation particulière est donc moins cher à fabriquer que celui de l'art antérieur. Le terminal client est donc adapté pour être utilisé même pour un faible nombre de transactions électroniques à effectuer avec un serveur distant.

L'invention porte encore sur un système électronique pour communiquer, depuis un terminal de transaction électronique tel que précité, à au moins un serveur.

Plus précisément, le système de l'invention comporte un terminal de transaction électronique pour communiquer, en tant que client, à au moins un serveur d'application, le terminal de transaction électronique comportant des moyens pour communiquer, de manière locale, au travers d'un réseau personnel, avec l'extérieur, le terminal de transaction électronique comportant des moyens pour transmettre au moins un élément d'identification prédéterminé du terminal et/ou utilisateur associé, à chaque communication;

Le serveur d'application comporte des moyens pour recevoir ledit au moins un élément d'identification prédéterminé, de façon à initialiser une transaction avec le terminal de transaction électronique et/ou gérer les communications dans le serveur.

Enfin, l'invention est un dispositif électronique comportant au moins un serveur d'application accessible de manière distante depuis l'extérieur.

Selon l'invention, le serveur d'application comporte des moyens pour recevoir au moins un élément d'identification prédéterminé d'un terminal ou utilisateur d'un terminal de transaction électronique client, de façon à initialiser et/ou gérer une communication / transaction avec le terminal de transaction électronique client.

Il convient de noter que seul le serveur d'application stocke une application à exécuter. Ainsi, contrairement à l'art antérieur précité où le terminal et le serveur ont chacun une application résidente, le terminal client de l'invention ne stocke aucune application résidente.

C'est donc le serveur qui pilote l'utilisateur, au travers de l'interface constituée par le terminal client, pour exécuter l'application stockée.

En d'autres termes, par rapport à la solution connue décrite plus haut, l'application est déportée depuis le terminal vers le serveur.

### Description des dessins :

D'autres caractéristiques et avantages de l'invention apparaîtront à la lecture de la description d'un unique mode de réalisation préférentiel de l'invention, donné à titre de simple exemple indicatif non limitatif et des dessins annexés, dans lesquels :
- la figure 1 présente un système, selon l'invention, comprenant un terminal de transaction client, qui interagit, au travers d'un terminal relais, avec un serveur d'application bancaire ;
- la figure 2 illustre un schéma détaillé du terminal de transaction client du système de la figure 1 ; et
- la figure 3 présente un organigramme simplifié d'un exemple d'un procédé mis en oeuvre par le système de la figure 1 pour accéder, depuis le terminal de transaction client de la figure 2, au serveur d'application bancaire.

### Description d'un mode de réalisation particulier :

Un système de l'invention est décrit, ci-dessous, pour une application de paiement bancaire, au titre de l'application préférée, mais non limitative.

L'application peut également être comprise dans la liste non exhaustive suivante :
- une application de contrôle d'identité ;
- une application de contrôle de points sur un permis de conduire ;
- une application de santé ;
- une application pour un programme de fidélité.

Le système de l'invention proposée peut, également, prendre en compte des cas plus complexes dans le secteur de prestations à domicile éventuellement financées, au moins en partie, par un ou plusieurs organismes sociaux de natures différentes, tels qu'en France, la Caisse d'Allocation Familiale, les Mairies, les Conseils Généraux et/ou Régionaux, la Caisse de Retraite et d'Assurance Maladie, la Caisse Nationale d'Assurance Vieillesse, les mutuelles de santé, ....

Le système de l'invention s'adapte à tout type de transactions effectuées depuis un site distant du serveur associé et nécessitant une initialisation préalable basée au moins sur une identification d'une personne utilisatrice d'un terminal client.

La transaction peut concerner une prestation de service quelconque, un utilisateur quelconque, sous un éventuel contrôle d'un ou plusieurs organismes publics ou privés.

Le système de l'invention proposé facilite le déploiement de transaction à effectuer, de manière mobile ou depuis un lieu prédéterminé, pour toute prestation de service, éventuellement en en facilitant des procédures administratives et/ou de contrôle.

Le système de l'invention peut être mis en oeuvre dans un schéma dit multi-bailleurs et multi-prestataires de service. Selon un tel schéma, le système permet également de traiter, le cas où un intervenant, travaillant chez un bénéficiaire, assure, en réalité, une prestation au titre d'une allocation, puis, travaille sous un autre régime financé par un autre financier ou bailleur que le précédant.

Dans tous les cas, le système de l'invention est basé sur un terminal client apte à communiquer en local, au travers d'un terminal relais, à un serveur.

C'est le terminal client qui transmet au serveur des informations nécessaires pour une initialisation d'une première transaction, dont au moins un élément d'identification prédéterminé d'un utilisateur. L'initialisation de la première transaction prépare toute transaction, non seulement la première transaction, mais toute transaction ultérieure, avec le serveur pour un même utilisateur.

Par le mot « transaction », il faut entendre, au cours d'une session d'utilisation par au moins un utilisateur, une transmission d'une requête, depuis le terminal client, via le terminal relais, à destination du serveur, afin d'exécuter une application. Le serveur peut, suite au traitement de la requête, en retour, envoyer au terminal client une réponse résultante correspondante.

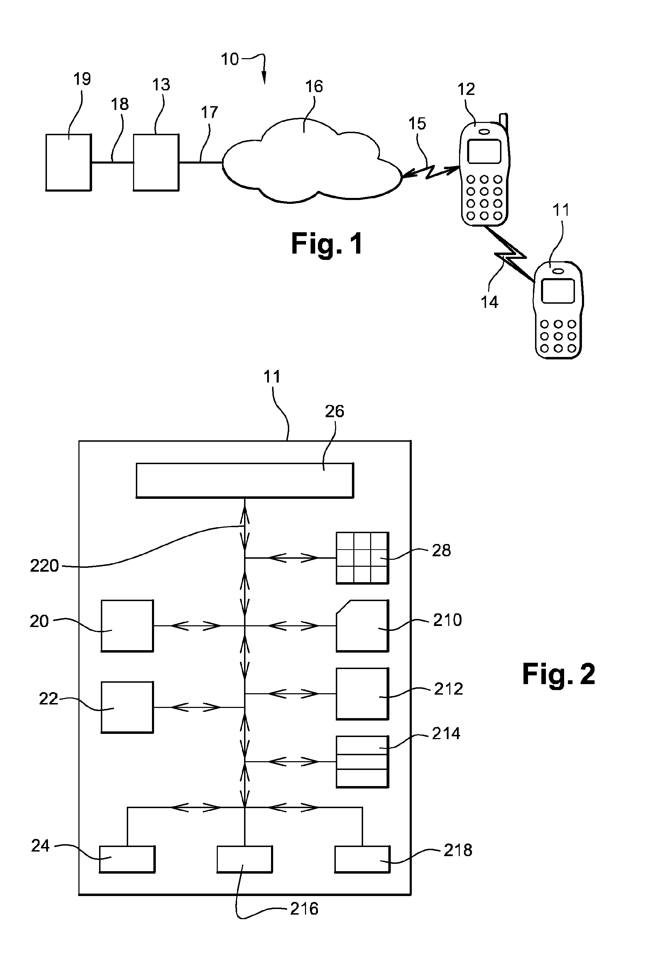

Comme présenté en figure 1, un système 10, selon un mode de réalisation particulier, comprend un terminal client 11, un terminal relais 12, et un serveur 13 de paiement bancaire.

Le système 10 assure la prise en compte de l'ensemble des informations nécessaires depuis le terminal client 11 pour initialiser, gérer et contrôler au moins une transaction de paiement bancaire dite, par souci de simplification, transaction ci-dessous.

Le terminal client 11 est destiné à être utilisé par un commerçant d'un produit ou d'un service, et constitue un terminal de transaction électronique.

Un utilisateur utilise le terminal client 11, à ce titre, pour transmettre des données au serveur 13, permettant d'initialiser une transaction, et de passer une ou plusieurs transactions.

L'initialisation, une fois effectuée, permet de lancer et exécuter une transaction, pour une application de paiement bancaire, au niveau du serveur 13.

Le serveur 13 est prévu, à distance, au sein d'une unité centrale ou ordinateur central (non représenté) auquel plusieurs terminaux clients peuvent se connecter.

C'est le serveur 13 qui collecte et mémorise les données d'identification de l'ensemble des utilisateurs des terminaux client.

Il convient de noter que seul le serveur d'application stocke en mémoire de type non volatile une application de paiement bancaire, et les données d'identification de l'ensemble des utilisateurs des terminaux client.

Selon un mode de réalisation particulier, le serveur se trouve dans un magasin au sein d'une caisse de paiement, et est accessible depuis un terminal client, via un routeur ou tout équipement de télécommunication, en tant que terminal relais.

Selon une variante de réalisation, le serveur se situe sur un site centralisant l'ensemble des transactions passées depuis de multiples terminaux clients sur un territoire prédéfini, tel que celui d'une région ou d'un pays. Un tel site est prévu, de préférence, d'accès physique restreint à un personnel limité.

L'ordinateur central peut héberger plusieurs serveurs d'application de types identiques ou différents, tels que bancaire, de santé et/ou de prestation à domicile.

Le terminal client 11 est connecté au terminal relais 12, au travers d'un réseau 14 d'accès personnel.

En tant que réseau 14 d'accès personnel, il s'agit d'un réseau nécessitant au terminal client 11, d'être à proximité immédiate du terminal relais 12, pour pouvoir communiquer. Comme réseau 14 personnel, on prévoit un réseau de communication radiofréquence de courte portée, tel que Bluetooth. La communication entre le terminal de transaction et le terminal relais peut être filaire.

Selon une alternative de réalisation, le réseau d'accès personnel est un réseau NFC.

Selon une autre alternative de réalisation, un réseau de communication par infra rouge constitue le réseau d'accès personnel nécessitant, outre le fait d'approcher le terminal client vis-à-vis du terminal relais ou inversement, de positionner, en ligne directe, une diode d'émission du terminal client vis-à-vis d'une diode de réception du terminal relais, pour pouvoir communiquer.

Selon une variante de réalisation, le réseau d'accès personnel est un réseau de communication à contact physique utilisant la technologie USB, SD ou MMC.

Le terminal client 11 communique, de manière locale, avec le terminal relais 12. En d'autres termes, le terminal client 11 communique avec le terminal relais 12 uniquement lorsqu'une antenne (non représentée) présente dans le terminal client 11 se trouve placée à proximité immédiate du terminal relais 12 équipé également d'une antenne (non représentée). L'utilisateur du terminal client 11 doit donc initier une communication par un acte volontaire de rapprochement du terminal client 11 vers le terminal relais 12 ou inversement, par exemple jusquà une dizaine de mètres.

Le terminal relais 12 est connecté, via un lien 15 radiofréquence, à un réseau public ou privé 16 de radiotéléphonie (de type GSM (acronyme pour « Global System for Mobile communications »), GPRS (acronyme pour « General Packet Radio Service »), CDMA (acronyme pour « Code Division Multiple Access »), et/ou d'autre.

Le terminal relais 12 peut intégrer un lecteur de support d'identification, tel qu'une carte à puce de type carte SIM, pour communiquer, au travers du réseau de radiotéléphonie mobile, pour le compte

Par souci de commodité, on désigne infra par réseau public 16, le réseau public ou privé.

Le terminal relais 12 (non représenté) inclut, d'une part, une interface de communication relative au réseau 14 d'accès personnel Bluetooth pour pouvoir communiquer avec le terminal client 11, et d'autre part, une interface de communication radiofréquence au réseau public 16, pour pourvoir communiquer avec le serveur 13.

Le réseau public 16 est relié, via une première liaison 17 filaire, au serveur 13.

Le serveur 13 est relié, via une deuxième liaison 18 filaire, au travers d'un réseau de type Internet ou Intranet, à un serveur 19 d'autorisation de transaction bancaire, dit serveur 19 d'autorisation.

Par l'expression « serveur d'autorisation », il faut comprendre tout serveur qui, à partir de données propres, par exemple à un acheteur d'un produit ou d'un service, qui lui sont fournies, autorise ou interdit, sous forme d'une réponse correspondante, une transaction électronique requise, sous forme de requête.

Les données propres à l'acheteur sont stockées au sein d'un support d'identification, telle qu'une carte à puce.

Le serveur 19 d'autorisation comporte des informations bancaires propres à un acheteur qui peut être impliqué dans une transaction pour autoriser un débit bancaire sur son compte du montant d'achat en question, pour l'achat du produit ou service proposé.

Le serveur 13 est ainsi accessible, à distance, depuis le terminal client 11, au travers du terminal relais 12.

Le serveur 19 d'autorisation est accessible, à distance, depuis le terminal client 11, au travers du terminal relais 12 et du serveur 13.

Le terminal client 11 est situé, à demeure, chez un commerçant ou est transporté par le commerçant pour effectuer au moins une transaction avec un acheteur disposant d'un compte bancaire associé et géré par le serveur 19 d'autorisation.

Pour exécuter une application centralisée au niveau du serveur 13, le terminal 11 client transmet, via le terminal relais 12, une requête de transaction correspondante au serveur 13. Le serveur 13 traite la requête, puis, de préférence, envoie une réponse résultante au terminal client 11. Pour traiter la transaction, le serveur 13 s'adresse éventuellement, au préalable, au serveur 19 d'autorisation pour obtenir soit une autorisation soit une interdiction de débit du compte bancaire d'un acheteur potentiel.

Avant d'effectuer une première transaction avec le serveur 13, le terminal client 11, suite à une première mise en route, lors d'une phase préliminaire d'initialisation d'une transaction, récupère un ou plusieurs éléments d'identification d'un utilisateur du terminal client 11.

En tant qu'élément(s) d'identification d'utilisateur, il s'agit d'au moins un élément appartenant au groupe comprenant :
- un numéro de contrat d'un utilisateur ;
- un numéro d'identification personnel d'un utilisateur ;
- un mot de passe connu seulement d'un utilisateur ;
- des données biométriques propres à un utilisateur, telles qu'une empreinte digitale d'un ou plusieurs doigts d'une seule main ou de deux mains, une image numérique faciale et/ou une image numérique de l'iris d'un seul oeil ou des deux yeux.

De telles données pour identifier l'utilisateur sont connues de l'utilisateur et/ou le caractérisent. De telles données d'identification sont fournies, de préférence, par l'utilisateur, au travers d'une ou plusieurs interfaces appropriées, au terminal client 11. Les données identifiant l'utilisateur sont stockées, de préférence, au sein d'une mémoire de type volatile du terminal client 11.

Selon une variante de réalisation, le terminal client 11 dispose, à demeure, de telles données pour identifier au moins un utilisateur prédéterminé, par exemple en les stockant dans une mémoire de type non volatile du terminal client 11, évitant ainsi à l'utilisateur (aux utilisateurs) de les fournir au terminal client 11.

Le terminal client 11 transmet au serveur 13 des données relatives à l'élément ou aux éléments d'identification de l'utilisateur (ou des utilisateurs) que le terminal client 11 a, préalablement recueilli, pour initialiser une transaction.

Toujours dans la phase préliminaire d'initialisation d'une transaction, le terminal client 11 transmet, au travers du terminal relais 12, au serveur 13, un ou plusieurs éléments d'identification du terminal client 11. L'élément ou les éléments d'identification du terminal client 11 ont été, de préférence, stockés dans une mémoire de type non volatile (de type ROM (acronyme pour « Read Only Memory » en langue anglaise) ou Flash ou autre) du terminal client 11 lors de sa fabrication.

Il n'existe aucune contrainte dans l'ordre de transmission des différents éléments d'identification de l'utilisateur et du terminal client 11 depuis le terminal client 11 vers le serveur 13. En d'autres termes, le terminal client 11 peut transmettre indifféremment soit l'élément d'identification de l'utilisateur suivi de l'élément d'identification du terminal client soit l'élément d'identification du terminal client suivi de l'élément d'identification de l'utilisateur ou bien encore, dans un même temps, l'élément d'identification de l'utilisateur et l'élément d'identification du terminal client.

En tant qu'élément d'identification du terminal client 11, il s'agit, de préférence, d'un numéro de série du terminal client 11.

Encore dans la phase préliminaire d'initialisation d'une transaction, l'une des entités du système 10 associe l'élément ou les éléments d'identification de l'utilisateur à l'élément ou les éléments d'identification du terminal client 11 transmis depuis le terminal client 11.

Le serveur 13 traite l'élément ou les éléments d'identification de l'utilisateur (ou de chacun des utilisateurs) et l'élément ou les éléments d'identification du terminal client 11 reçues depuis le terminal client 11.

De préférence, le serveur 13 est adapté pour associer l'élément ou les éléments d'identification de l'utilisateur à l'élément ou les éléments d'identification du terminal client 11 reçues depuis le terminal client 11.

Pour la transaction elle-même, le serveur 13 collecte des données propres à une première personne dont le compte bancaire est à débiter et des données propres à une deuxième personne dont le compte bancaire est à créditer.

Selon une situation particulière, les première et deuxième personnes forment une seule et même personne physique.

Il peut donc exister une ou deux personnes utilisatrices du terminal client 11 pour fournir les données concernées.

Il peut, ainsi, exister une seule personne avec deux profils distincts, l'un de créditeur, l'autre de débiteur, ou deux personnes distinctes avec deux profils distincts, une première personne avec un profil de créditeur, et une deuxième personne avec un profil de débiteur.

La transaction consiste, par exemple, pour une session de communication donnée, à débiter d'un montant d'achat déterminé, un compte bancaire d'une personne achetant un produit (ou un service) prédéterminé, et à créditer du montant d'achat, un compte bancaire d'une personne vendant le produit ou service. La transaction implique donc un échange de données propres à un acheteur et un commerçant entre le terminal client 11 et le serveur 13 via le terminal relais 12.

De préférence, le terminal client 11 et le serveur 13 partagent un même algorithme de chiffrement prédéterminé, et un même algorithme de déchiffrement prédéterminé stockés dans une mémoire respective, par exemple, de type non volatile. Le terminal client 11 et le serveur 13 sont, respectivement, adaptés pour encrypter, selon l'algorithme de chiffrement, des données à émettre de l'un vers l'autre, et inversement, et décrypter des données reçues par l'un depuis l'autre, selon l'algorithme de déchiffrement. Pour ce faire, le terminal client 11 est chargé, lors de sa fabrication, de données relatives aux secrets et certificats nécessaires à un chiffrement de données à transmettre et un déchiffrement de données à recevoir, afin d'assurer la protection des données à échanger avec le serveur 13. De même, le serveur 13 est configuré avec des données relatives aux secrets et certificats nécessaires à un chiffrement de données à transmettre et un déchiffrement de données à recevoir.

II est à noter qu'un même utilisateur peut, bien entendu, utiliser plusieurs terminaux clients, pour une même application de paiement bancaire. Ainsi, plusieurs terminaux clients peuvent transmettre, pour un même utilisateur, un même élément d'identification d'utilisateur (ou des mêmes éléments d'identification d'utilisateur). Le système 10 associe alors un même élément d'identification d'utilisateur (ou des mêmes éléments d'identification d'utilisateur) à chacun des terminaux clients utilisés par l'utilisateur en question.

Le terminal relais 12 joue donc un rôle de simple « modem » ou passerelle entre le terminal client 11 et le serveur 13. En d'autres termes, le terminal relais 12 re-transmet les données reçues du terminal client 11 vers le serveur 13 et vice-versa, et ce sans modifier leur contenu.

Il est à noter qu'aucune référence ou ni aucune donnée d'identification du terminal relais 12 n'est transmise au serveur 13. En d'autres termes, le terminal relais 12 n'est pas obligatoirement le même entre celui utilisé pour la phase d'initialisation d'une transaction (entre le terminal client 11 et le serveur 13) et celui utilisé pour effectuer une transaction. Un autre terminal relais distinct du terminal relais 12 (de même type ou d'un type distinct) peut être utilisé pour effectuer une transaction sans pour autant perdre le bénéfice d'une initialisation d'une transaction effectuée avec le terminal relais 12. Ainsi, l'utilisateur est libre de choisir le terminal relais et peut en changer sans pour autant affecter une transaction à effectuer entre le terminal client 11 et le serveur 13.

Il est à noter qu'un même terminal relais 12 peut être associé à plusieurs terminaux clients.

Selon différentes variantes de réalisation, le terminal relais 12 à utiliser pour initialiser une transaction et éventuellement effectuer une transaction est un ordinateur personnel (ou PC), un noeud de connexions à un réseau ou hub, et/ou un agenda numérique personnel (ou PDA).

Le serveur 13 stocke, et est adapté pour exécuter une application bancaire.

Le terminal client 11 de l'invention ne dispose, quant à lui, d'aucune application résidente.

Le serveur 13 comporte, entre autres, une interface de communication au réseau public pour recevoir des données d'utilisateur(s) depuis le terminal client 11, une interface de communication au serveur 19 hôte pour transmettre et/ou recevoir des données d'utilisateur(s) relevant de la société bancaire gérant le serveur 19 hôte, une mémoire non volatile capable de stocker de nombreuses données propres à des individus physiques et/ou d'entités juridiques (sociétés et/ou d'autre(s) forme(s) juridique(s)), et des moyens de traitement et de contrôle de données (tel un processeur) de puissance de traitement élevée (par rapport à ceux prévus au sein du terminal client 11).

La mémoire non volatile est, en outre, destinée à stocker des données de toutes les transactions à opérer.

Le serveur 13 est adapté pour initialiser une transaction avec tout terminal client 11.

Le serveur 13 est adapté pour implémenter un protocole de communication approprié à l'application bancaire.

Le serveur 13 est adapté pour gérer des plafonds et des droits propres à des porteurs de supports d'identification qui leur sont propres, tels que des cartes à puce.

Le serveur 13 est adapté pour paramétrer une communication avec le terminal client 11. Un tel paramétrage est effectué après une connexion, à l'initiative, selon un mode de réalisation particulier, du terminal client 11, pour initialiser une transaction.

Le serveur 13 est, en outre, optionnellement adapté pour gérer au moins l'une des fonctionnalités de la liste non exhaustive qui suit :
- une ou plusieurs applications non bancaires ;
- une analyse statistique des transactions effectuées ;
- une consolidation des transactions de plusieurs terminaux pour un même commerçant ;
- une gestion locale d'oppositions aux porteurs de supports d'identification d'utilisateurs ;
- un accès aux données résidentes au sein du serveur via Internet pour leur consultation et/ou leur modification.

La mémoire non volatile du serveur 13 stocke, en particulier, les éléments d'identification des utilisateurs transmis depuis différents terminaux clients déjà enregistrés et les éléments d'identification des terminaux clients s'étant déjà connectés pour ce faire.

Il est à noter que le serveur 13 ou un autre serveur (non représenté) associé au serveur 13 est, en outre, accessible en ligne au travers d'une liaison Internet dédiée pour fournir à tout nouvel utilisateur à enregistrer un ou plusieurs éléments d'identification propres à chaque utilisateur. Pour ce faire, un utilisateur désirant s'enregistrer possède, par exemple, un ordinateur relié au travers d'un réseau filaire Internet au serveur 13 (ou à l'autre serveur associé). L'utilisateur se connecte alors, à distance, sur le serveur 13 (ou celui y associé) pour afficher et remplir des informations qui lui sont propres sur une page du site Internet correspondant. Ensuite, le serveur 13 connecté lui attribue un élément ou des éléments d'identification d'utilisateur de manière unique et personnelle, à utiliser pour initialiser une transaction.

En outre, la mémoire non volatile du serveur 13 comporte une zone dans laquelle est associée à l'élément ou aux éléments d'identification de chaque utilisateur s'étant signalé lors d'une phase d'initialisation préalable depuis un terminal client (et au travers d'un terminal relais), au moins un élément d'identification du terminal client 11, par exemple sous forme de table. La table est adressable en fournissant soit l'élément ou les éléments d'identification d'un utilisateur soit l'élément d'identification d'un terminal client associé.

De préférence, la mémoire de type non volatile du serveur 13 stocke, en outre, des données relatives à des certificats d'authentification nécessaires à l'authentification du terminal client 11 et/ou du serveur 13.

De préférence, la mémoire de type non volatile du serveur 13 stocke, en outre, des algorithmes de chiffrement et déchiffrement et des secrets nécessaires à la sécurisation des données à transmettre au terminal client 11 et à recevoir depuis le terminal client 11.

Le terminal client 11 et le serveur 13 contribuent, de manière répartie, pour exécuter une transaction par rapport à une telle transaction qui serait exécutée sur un terminal, à demeure, dit sur le point de vente dit terminal autonome, c'est-à-dire un terminal adapté pour exécuter l'application de paiement bancaire en question dont il dispose de manière résidente.

Le serveur 13 est vu, depuis une interface avec la banque qui la gère (ou qui la fait gérer en externe), comme autant de terminaux autonomes qu'il existe de terminaux clients enregistrés auprès et gérés par le serveur 13.

Comme montré en figure 2, selon un mode de réalisation particulier, chaque terminal client 11 de l'invention comporte des moyens 20 de traitement et de contrôle de données, une ou plusieurs mémoires symbolisées par un seul bloc mémoire 22, et une interface de communication de type Bluetooth 24, en tant qu'interface de communication à un réseau d'accès personnel.

Les moyens 20 de traitement et de contrôle de données sont constitués par un microprocesseur ou par une unité de traitement logique. La puissance de traitement associée doit suffire pour exécuter des commandes basiques de communication avec le serveur 13 et, éventuellement, des commandes basiques de communication avec un support d'identification porté par un acheteur et/ou un commerçant.

De tels moyens 20 de traitement et de contrôle de données constituent l'organe central de traitement et de décision du terminal client 11.

Ils mettent en oeuvre, entre autres, un système d'exploitation gouvernant leur fonctionnement.

Le bloc mémoire 22 comprend au moins une mémoire de type non volatile (de type ROM ou Flash) et au moins une mémoire de type volatile.

La mémoire de type non volatile stocke, entre autres, le système d'exploitation et des données propres à l'élément ou aux éléments d'identification du terminal client, tel que son numéro de série.

Selon un mode de réalisation non préférentiel, l'utilisateur entre au travers d'une ou plusieurs interfaces homme-machine, telle qu'un clavier et/ou un haut-parleur, l'élément ou les éléments d'identification du terminal client, qui sont alors stockés dans la mémoire non volatile.

Selon un mode de réalisation préférentiel, un ou des éléments d'identification du terminal client sont stockés dès la fabrication du terminal client 11.

La mémoire de type volatile est constituée d'une mémoire de type RAM (acronyme pour « Random Access Memory ») ou autre. A l'état initial, la mémoire de type volatile est vide, c'est-à-dire ne stocke notamment aucune donnée propre à son utilisateur. La mémoire de type volatile stocke, de manière temporaire, des données propres à l'élément ou aux éléments d'identification d'un utilisateur. Les données propres à l'élément ou aux éléments d'identification d'un utilisateur sont recueillies, de préférence, au travers d'une interface homme-machine (telle que décrite plus bas), et fournies par l'utilisateur lui-même, ou, depuis un support d'identification introduit ou approché par l'utilisateur d'une interface à contact ou sans contact dédiée (telle que décrite plus bas).

De préférence, une fois transmis l'élément ou les éléments d'identification de l'utilisateur au serveur 13, le terminal client 11 est adapté pour les effacer immédiatement après leur transmission, et ce avant même une extinction du terminal client 11 pour éviter leur vol ou usurpation.

La mémoire de type volatile efface automatiquement, de manière connue en soi, toutes les données dont notamment celles identifiant l'utilisateur, qu'elle stocke après une extinction suivie d'une remise en service du terminal client 11.

On comprend que le terminal client 11 dispose d'une mémoire de type non volatile de taille bien inférieure à la solution connue nécessitant notamment de stocker l'application bancaire bien plus volumineuse que les seules données identifiant le terminal client représentant un espace mémoire minimum.

Le support d'identification d'un utilisateur peut revêtir de multiples formes, telle que celle d'une clef de type USB ou autre, ou d'un dongle ne nécessitant d'aucun lecteur spécifique pour lire les données qu'il stocke.

Il peut également s'agir d'une carte à puce. La carte à puce est, par exemple, telle que connue en soi, à un format ISO, et comporte dans la puce, en mémoire non volatile, l'élément ou les éléments d'identification de la personne à laquelle elle a été attribuée en tant que son utilisateur. La carte à puce est destinée à être lue depuis un lecteur 210 à contact de type ISO 7816.

De manière optionnelle, le terminal client 11 est pourvu d'un lecteur de carte à mémoire 212, par exemple de type SD, MMC, et/ou autre. Le lecteur de carte à mémoire est destiné à lire une carte à mémoire stockant notamment l'élément ou les éléments d'identification de son porteur.

De manière optionnelle, la carte à puce porte, sur une de ses faces, une piste magnétique. Cette dernière porte l'élément ou les éléments d'identification de la personne à laquelle elle a été attribuée en tant qu'utilisateur de la carte à puce. La piste magnétique est destinée à être lue par un lecteur à piste magnétique 214 prévu au sein du terminal client 11.

Le terminal client 11 inclut, en tant qu'interface homme-machine, un clavier 26 et un afficheur 28 de type LCD (acronyme pour « Liquid Crystal Display » en langue anglaise) ou autre. Le clavier 26 est utilisé pour entrer notamment, par saisie, des données correspondant à l'élément d'identification de son utilisateur. L'afficheur 28 est utilisé pour afficher des messages interactifs sous le contrôle du microprocesseur 20, afin de guider l'utilisateur dans la saisie pour l'initialisation d'une transaction, et éventuellement opérer une transaction.

La mémoire de type non volatile 22 stocke, en outre, les messages interactifs s'affichant sur l'afficheur 28.

La mémoire de type non volatile 22 stocke, en outre, un programme d'initialisation d'une transaction, afin, d'une part, d'enregistrer des données personnelles lui permettant de s'identifier, et d'autre part, d'enregistrer des données d'identification du terminal client même.

La mémoire de type non volatile 22 stocke, en outre, des données relatives à une adresse IP (acronyme pour « Internet Protocol » en langue anglaise) prédéterminée et propre au serveur 13. L'adresse IP est alors récupérée par le microprocesseur 20 avant de se connecter, au travers de l'interface Bluetooth 24, via le terminal relais 12, au serveur 13, et ce de manière automatique, c'est-à-dire sans intervention de l'utilisateur.

De préférence, la mémoire de type non volatile 22 stocke, en outre, des données relatives à des certificats d'authentification nécessaires à l'authentification du serveur 13 et/ou du terminal client 11.

De préférence, la mémoire de type non volatile 22 stocke, en outre, des algorithmes de chiffrement et déchiffrement et des secrets nécessaires à la sécurisation de données à transférer au serveur 13 et à recevoir depuis le serveur 13.

De manière optionnelle, le terminal client 11 dispose d'une imprimante interne (non représentée) ou d'un port série 216 pour communiquer avec une imprimante (non représentée) externe au terminal client 11. L'imprimante est alors utilisée pour imprimer, par exemple, un compte-rendu de l'initialisation d'une transaction et/ou d'une opération de transaction proprement dite.

Egalement de manière optionnelle, le terminal client 11 dispose d'un lecteur d'empreinte digitale 218, pour pouvoir fournir, depuis l'extérieur, des données en tant qu'élément d'identification de l'utilisateur, au terminal client 11.

De manière optionnelle, le terminal client 11 dispose d'un lecteur sans contact (non représenté) de type NFC ou autre, pour pouvoir communiquer, via un lien radiofréquence, avec un support d'identification relatif à un utilisateur à proximité immédiate du terminal client 11.

L'interface de communication Bluetooth 24 est utilisée pour communiquer, via un lien radiofréquence, de courte ou moyenne portée, par exemple jusqu'à une dizaine de mètres, avec le terminal relais 12.

Selon une variante de réalisation (non représentée), une interface de communication à contact par exemple de type USB (ou autre) remplace l'interface de communication sans contact, pour communiquer avec le terminal relais 12.

Selon encore une autre variante de réalisation (non représentée), une interface de communication à contact par exemple de type USB (ou autre) et une interface de communication sans contact cohabitent et peuvent, chacune, communiquer avec le terminal relais 12. C'est alors l'utilisateur qui décide et sélectionne l'interface de communication qu'il souhaite utiliser en fonction du terminal relais qu'il utilise et/ou de l'interface de communication dont le terminal relais dispose et/ou de l'environnement, afin d'éviter notamment le vol à la volée de données propres à un utilisateur du terminal client. Selon une telle variante, le terminal client 11 est doté, en outre, d'un dispositif de sélection de l'interface de communication qu'il souhaite utiliser.

Les différents éléments sont reliés entre eux par un bus bidirectionnel interne 220.

Optionnellement, le terminal client 11 est adapté pour réaliser, de manière autonome, c'est-à-dire sans intervention du serveur 13 ou d'autre entité du système 10, tout traitement relatif à une exigence sécuritaire, tel qu'un affichage d'un prompt de saisie de PIN (acronyme pour « Personal Identity Number » en lague anglaise), une saisie et une présentation de PIN à la carte, une élaboration du PIN bloc chiffré, ainsi qu'une surveillance de tentative d'intrusion.

Grâce à la présente invention, le terminal client 11 offre un encombrement et un poids réduits par rapport au terminal relais 12. Le terminal client 11 est simple et peu cher du fait de l'intégration, non pas d'une interface de communication à un réseau public, mais d'une simple interface de communication à un réseau d'accès personnel (moins consommatrice en énergie que l'interface de communication à un réseau public) ne nécessitant, de ce fait, que d'une batterie de capacité moins élevée que celle nécessaire pour le terminal relais 12.

Il est à noter que le terminal client 11 n'a pas besoin de stocker, à son niveau, une application résidente, pour l'exemple décrit, l'application de paiement bancaire.

En outre, le terminal client 11 ne nécessite aucune phase de personnalisation lors de sa fabrication et est, toutefois, prêt à être utilisé. Une première utilisation nécessite, cependant, que l'utilisateur fournit lui-même directement au terminal client 11 ou indirectement, via un support d'identification de son porteur destiné à coopérer avec le terminal client 11, l'élément ou les éléments d'identification d'utilisateur qui lui sont associés et/ou attribués à transmettre au serveur 13, pour initialiser une transaction.

Le terminal client 11 est apte à exécuter une phase d'initialisation d'une transaction et au moins une transaction à suivre, éventuellement après extinction du terminal client 11 entre deux transactions.

Pour ce faire, selon un mode de réalisation particulier, un utilisateur commerçant souscrit, à travers un site web dédié, un nouveau contrat commerçant, en fournissant des informations nécessaires pour ouvrir, en ligne, un compte bancaire commerçant. Une fois de telles informations validées, le contrat commerçant est créé sur le serveur 13. Puis, un ordre d'expédition à l'attention du commerçant d'un terminal client depuis un dépôt logistique est émis.

A réception d'un terminal client 11, le commerçant lance le programme d'initialisation d'une transaction. Un tel programme d'initialisation permet de récupérer des données personnelles au commerçant lui permettant de s'identifier, et des données relatives au terminal client lui-même, tel un numéro d'identification du terminal client. Les données personnelles du commerçant ont été, auparavant, fournies et reçues lors de la souscription.

Les données personnelles du commerçant et le numéro d'identification du terminal client sont transmises par le terminal client 11 au serveur 13, au travers du terminal relais 12.

Un tel programme d'initialisation permet, de préférence au serveur 13, d'associer, par exemple, le contrat commerçant avec le numéro d'identification du terminal client.

Une fois une telle association effectuée, toute connexion ultérieure peut se faire automatiquement, c'est-à-dire sans que le commerçant ne resoumette ses données personnelles, sauf s'il utilise un autre terminal client pour effectuer une transaction.

Le terminal client 11 utilisé pour l'initialisation d'une transaction est alors initialisé et donc prêt pour exécuter une transaction.

Il est à noter que le terminal client 11 exécute toute transaction sous le contrôle du serveur 13.

De manière optionnelle, une protection d'accès à l'utilisation du terminal client est prévue pour n'autoriser que le seul commerçant ayant effectivement souscrit un contrat, par exemple à l'aide d'un code PIN.

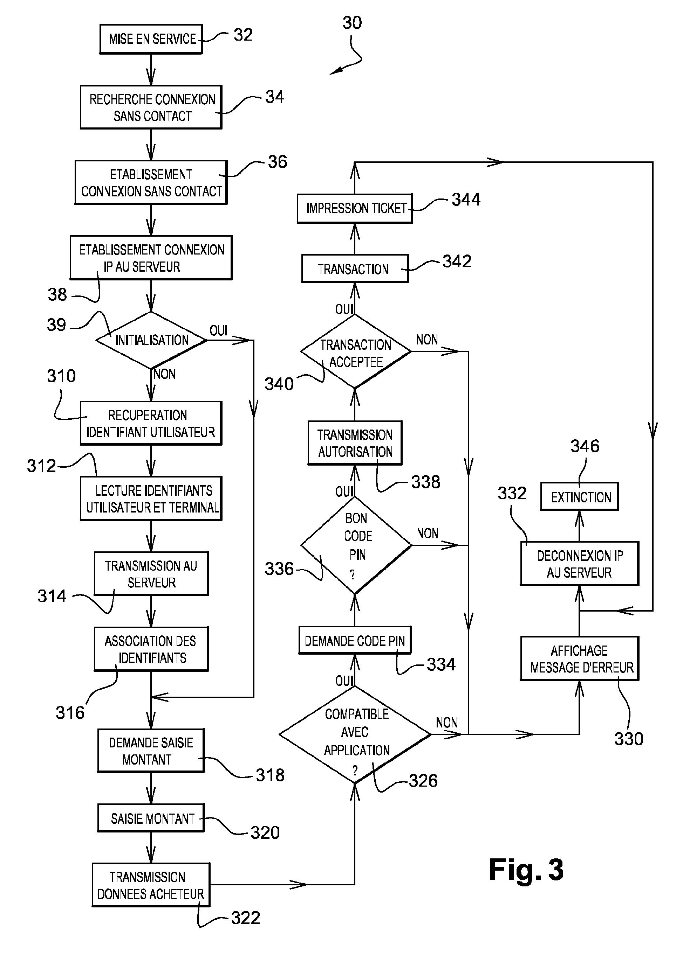

La figure 3 montre un organigramme relatif à une phase d'initialisation d'une transaction entre le terminal client 11 et le serveur 13, immédiatement suivie d'une transaction bancaire selon l'application bancaire stockée dans le serveur 13.

Tout d'abord, les différentes entités du système 10 sont mises en service 32, c'est-à-dire alimentées. Le serveur 13 est mis en route et devient prêt à recevoir toute demande de connexion. De même, le terminal client 11 et le terminal relais 12 sont mis sous tension.

Puis, le terminal client 11 et le terminal relais 12 recherchent 34 une connexion sans contact l'un avec l'autre, au travers de leurs interfaces respectives de communication (sans contact) Bluetooth.

Une fois la connexion trouvée, le terminal client 11 et le terminal relais 12 établissent 36 une seule connexion sans contact entre eux.

Ensuite, le terminal client 11, à l'aide de l'adresse IP stockée en mémoire non volatile, lance et établit 38, au travers du terminal relais 12, une connexion IP avec le serveur 13 visé.

Selon une étape préférentielle d'authentification mutuelle (non représentée), le terminal client 11 vérifie l'authenticité du serveur 13, et inversement, c'est-à-dire que le serveur 13 vérifie l'authenticité du terminal client 11. L'authentification mutuelle du terminal client 11 et du serveur 13 effectuée, la connexion IP établie entre le terminal client 11 et le serveur 13 est sécurisée. Au cours de cette étape, le terminal client 11 transmet, en particulier, un ou des éléments permettant de s'identifier.

Puis, le serveur 13 vérifie 39 qu'une phase d'initialisation d'une transaction a déjà eu lieu, c'est-à-dire que les éléments d'identification, d'une part, de l'utilisateur, et d'autre part, du terminal client sont effectivement associés au niveau du serveur 13.

Si une telle phase d'initialisation d'une transaction s'est déjà antérieurement produite, alors on passe à une étape ultérieure 318 propre au démarrage d'une opération de transaction en tant que telle.

Dans le cas contraire, c'est-à-dire si la phase d'initialisation n'est pas déjà survenue, le serveur 13 transmet, au travers du terminal relais 12, un message destiné au terminal client 11, pour requérir un élément ou des éléments d'identification de l'utilisateur. Le terminal client 11 recueille 310, via une de ses interfaces d'entrée, un ou plusieurs éléments d'identification de son utilisateur que le terminal client 11 stocke immédiatement au sein d'une mémoire, de préférence de type volatile.

Puis, le terminal client 11 lit 312, sa mémoire non volatile, dans laquelle est stocké un élément d'identification du terminal client, et sa mémoire volatile sauvegardant, temporairement, l'élément ou les éléments d'identification de son utilisateur, pour récupérer l'ensemble de ces éléments avant leur transmission au serveur 13.

Le terminal client 11 transmet 314, en un ou plusieurs messages, l'élément ou les éléments d'identification de l'utilisateur et l'élément d'identification du terminal client, au travers du lien Bluetooth établi avec le terminal relais 12, via le terminal relais 12, au serveur 13.

Le serveur 13 après avoir reçu le ou les messages contenant les éléments d'identification, d'une part, de l'utilisateur, et d'autre part, du terminal client 11, le serveur 13 associe 316 ces éléments d'identification et les stocke en mémoire non volatile. Une telle association effectuée clôture la phase d'initialisation d'une transaction, avant de pouvoir exécuter au moins une transaction à suivre.

Après que le terminal client 11 affiche 318 sur l'afficheur un message demandant le montant à débiter sur un compte bancaire, l'utilisateur saisit 320 au clavier du terminal client 11 le montant à débiter.

Puis, le terminal client 11 affiche sur l'afficheur un message demandant d'insérer un support, tel qu'une carte à mémoire, propre à un acheteur dont le compte bancaire est à débiter. L'utilisateur insère alors le support de l'acheteur, par exemple dans le lecteur de carte à mémoire prévu dans ou relié, au travers d'une interface appropriée, au terminal client 11.

Le terminal client 11 récupère alors des données lues depuis le support, puis, transmet 322 les données relatives à l'acheteur, au travers du terminal relais 12, au serveur 13.

Le serveur 13, après avoir reçu les données de l'acheteur et le montant à débiter, vérifie 326 qu'au moins certaines des données de l'acheteur reçues, telles que une date d'expiration, une liste d'opposition de titulaires de supports, sont compatibles avec l'application bancaire.

Après un échec de la compatibilité des données d'au moins certaines des données de l'acheteur avec l'application bancaire, le serveur 13 adresse, au travers du terminal relais 12, un message d'erreur approprié à afficher 330 à l'afficheur du terminal client 11. Puis, le terminal client 11 se déconnecte 332 du serveur 13 auquel il était connecté ou se met en veille en attente d'une nouvelle transaction ou d'une demande de coupure d'alimentation. Le terminal relais 12 se déconnecte alors. Ensuite ou parallèlement, le terminal client 11 s'éteint 346, par exemple après l'écoulement d'une temporisation d'une durée prédéfinie et initialisée par exemple à quelques secondes.

Sinon, c'est-à-dire suite à un succès de la compatibilité des données d'au moins certaines des données de l'acheteur avec l'application bancaire, le serveur 13 adresse 334, au travers du terminal relais 12, un message demandant à l'acheteur, porteur du support de données, son code PIN.

Puis, le terminal client 11 vérifie 336 si l'acheteur fournit le bon code PIN.

Si l'acheteur fournit le bon code PIN, le terminal client 11 transmet 338, via le terminal relais 12, au serveur 13, un message relatif à un succès de présentation du code PIN.

Dans le cas contraire, c'est-à-dire après avoir échoué à la présentation du code PIN, on passe à l'étape 330 d'affichage d'un message d'erreur approprié fourni par le serveur 13. Puis, on passe à l'étape 332 de déconnexion du terminal client 11 au serveur 13 suivie de l'étape 346 d'extinction du terminal client 11.

Suite à la réception du message relatif à un succès de présentation du code PIN, le serveur 13 vérifie 340 si la transaction demandée est acceptée en fonction de plusieurs conditions à satisfaire.

Pour vérifier l'acceptation de la transaction, il peut être nécessaire au serveur 13 de transmettre au serveur 19 d'autorisation bancaire un message de demande d'une autorisation.

Si l'acceptation de la transaction est refusée par le serveur 13 ou par le serveur 19 d'autorisation, on passe à l'étape 330 d'affichage d'un message d'erreur approprié fourni par le serveur 13. Puis, on passe à l'étape 332 de déconnexion du terminal client 11 au serveur 13 suivie de l'étape 346 d'extinction du terminal client 11.

Après une éventuelle réception d'un message d'autorisation de la transaction depuis le compte bancaire de l'acheteur depuis le serveur 19 d'autorisation consulté préalablement, le serveur 13 effectue 342 la transaction demandée (débit du compte bancaire de l'acheteur du montant donné au crédit du compte bancaire de l'utilisateur commerçant). Puis, le serveur 13 transmet, via le terminal relais 12, au terminal client 11, un message informant que la transaction demandée a été effectuée.

Le terminal client 11 s'adresse 344 à l'imprimante connectée une impression du ticket propre à la transaction effectuée et destiné à l'acheteur, porteur du support d'identification. Puis, on passe à l'étape 332 de déconnexion du terminal client 11 au serveur 13 suivie de l'étape 346 d'extinction du terminal client 11.

Lors d'une nouvelle mise sous tension du terminal client 11, on passe à l'étape 32 initiale de mise en service des entités du système.

Selon, une variante de mise en oeuvre,

Lors de l'acquisition d'un terminal banalisé, un utilisateur, par exemple commerçant, reçoit un identifiant associé à un identifiant stocké dans le terminal et qui peut être un numéro de série du terminal. Il se connecte à une base liée au serveur d'application, notamment via internet, pour ouvrir un compte ou s'initialiser dans la base avec son identifiant reçu. Cette opération permettra de reconnaître dans la base quelles transactions futures lui sont associées. Sur le site internet, l'utilisateur renseigne à distance une page de données en saisissant le numéro reçu ainsi que son identifiant ou données de commerçant.

Ainsi, l'appairage ou initialisation s'effectue directement sur la base de données de l'application.

Ainsi, le terminal n'a pas besoin de mettre en oeuvre ou de proposer un programme d'initialisation lors de sa mise en route. Par contre, le terminal de transaction comporte des moyens permettant d'associer l'identifiant, par exemple numéro de série stocké dans le terminal à la transaction ou à une session ouverte entre le terminal et un serveur d'application.

Le terminal comporte donc pour communiquer, avec au moins un serveur d'application, des moyens pour communiquer, de manière locale, au travers d'un réseau personnel, avec l'extérieur; Le teerminal comporte des moyens (20, 22, 24) pour transmettre au moins un élément d'identification prédéterminé d'un utilisateur du terminal et/ou utilisateur associé, à chaque communication.

Le terminal est ainsi prêt à recevoir la carte d'un acheteur ou carte d'un tiers (patient...) pour effecteur une transaction.

Au moins un identifiant (terminal de transaction et/ou utilisateur) associé à chaque transaction ou session peut permettre de gérer les transactions ou session dans un serveur ou base distante lié à une application.

Le cas échéant, l'identifiant associé à la communication / transaction peut être un identifiant de l'utilisateur lié au terminal relais.

Selon un autre mode de mise en oeuvre, l'utilisateur saisit lors d'une première utilisation, son identifiant dans le terminal. Ce peut être, bien que peu recommandé, ses données ou compte de commerçant. Et lors d'une session ou transaction, cet identifiant est associée à la transaction ou session notamment en étant transmis dans des données échangées, pour être géré dans une base.

Cet identifiant est de préférence stocké dans le terminal et rappelé à chaque transaction.

Le terminal comporte donc également des moyens pour transmettre cet identifiant au cours d'une session ou transaction. L'identifiant peut être éventuellement chiffré, codé, ou glissé dans un message.

Là aussi, il peut ne pas y avoir de programme d'initialisation dans le terminal.

Selon un autre mode de mise en oeuvre, l'invention peut également permettre une initialisation (référencement dans une base) à l'initiative du serveur d'application qui lors de la mise en oeuvre d'une première transaction ne retrouve pas trace d'un dossier ou d'un identifiant de l'utilisateur. Le serveur comporte donc un programme qui va émettre des messages ou diriger à distance une session de saisie ou de récolte d'information sur le terminal d'application permettant de référencer l'utilisateur dans la base. Ces informations sont ensuite remontées au serveur via le terminal relais.

Toutefois, l'identifiant lié ou associé à la transaction peut être au préalable également crée dans une base d'un serveur distant pour identification et gestion ultérieure.

Selon un mode de mise en oeuvre préféré, le procédé comporte une phase d'initialisation d'une transaction, au travers du terminal relais, entre le terminal de transaction électronique et le serveur d'application, la phase d'initialisation d'une transaction comprenant une étape de récupération d'au moins un élément d'identification prédéterminé d'un utilisateur et/ou d'un identifiant de terminal qui lui est associé; l'association est faite notamment dans le serveur distant.

## Revendications

1. Procédé pour communiquer, depuis un terminal (11) de transaction électronique d'un utilisateur, en tant que client, avec au moins un serveur (13) d'application, **caractérisé en ce qu'**il met en oeuvre :
- un terminal de transaction électronique apte à être relié à un terminal relais (12) via des moyens de communication (24) d'un réseau personnel local, le terminal relais comportant des moyens de communication pour communiquer avec un serveur d'application via un réseau public ou privé,
- et **en ce qu'**il comporte une étape de transmission d'au moins un identifiant du terminal de transaction et/ou utilisateur associé à chaque communication de manière à initialiser et/ou gérer les communications/transactions dans le serveur (13).

2. Procédé selon la revendication 1, **caractérisée en ce qu'**il comporte une phase d'initialisation d'une transaction, au travers du terminal relais, entre le terminal de transaction électronique et le serveur d'application, la phase d'initialisation d'une transaction comprenant une étape (310) de récupération d'au moins un élément d'identification prédéterminé d'un utilisateur du terminal de transaction.

3. Procédé selon la revendication 1, **caractérisée en ce qu'**il comporte une phase d'initialisation d'une transaction au travers du terminal relais entre le terminal de transaction électronique et le serveur d'application, cette phase comprenant une étape (314) de transmission, à destination du serveur d'application, de l'élément d'identification prédéterminé de l'utilisateur du terminal de transaction électronique.

4. Procédé selon la revendication 1 ou 2, dans lequel la phase d'initialisation d'une transaction au travers du terminal relais entre le terminal de transaction électronique et le serveur d'application comprend une étape (314) de transmission, à destination du serveur d'application, d'au moins un élément d'identification du terminal de transaction électronique.

5. Procédé selon la revendication 4, elle-même dépendante de la revendication 3, dans lequel la phase d'initialisation d'une transaction au travers du terminal relais entre le terminal de transaction électronique et le serveur d'application comprend une étape (316) d'association de l'élément d'identification prédéterminé de l'utilisateur à l'élément d'identification du terminal de transaction.

6. Procédé selon la revendication 5, dans lequel l'étape (316) d'association de l'élément d'identification prédéterminé de l'utilisateur à l'élément d'identification du terminal de transaction électronique est mise en oeuvre par le serveur (13) d'application.

7. Procédé selon la revendication 6, dans lequel l'étape d'association de l'élément d'identification prédéterminé de l'utilisateur à l'élément d'identification du terminal de transaction électronique est mise en oeuvre par au moins une des entités d'un système comprenant le terminal de transaction électronique, le terminal relais et le serveur d'application.

8. Procédé selon l'une des revendications 1 à 7, dans lequel l'élément d'identification prédéterminé de l'utilisateur comprend au moins un élément du groupe comprenant :
- un numéro de contrat d'un utilisateur ;
- des données biométriques d'un utilisateur ;
- un numéro d'identification personnel d'un utilisateur ;
- un mot de passe propre à un utilisateur.

9. Procédé selon l'une des revendications 4 à 8, dans lequel l'élément d'identification du terminal de transaction électronique est un numéro de série du terminal de transaction électronique.

10. Procédé selon la revendication 9, dans lequel l'application du serveur d'application est comprise au sein de la liste suivante :
- une application de paiement électronique ;
- une application de santé ;
- une application d'un programme de fidélité.

11. Terminal (11) de transaction électronique pour communiquer, en tant que client, à au moins un serveur d'application,
**caractérisé en ce que** le terminal de transaction électronique comporte des moyens (24) pour communiquer, de manière locale, au travers d'un réseau personnel, avec l'extérieur,
et **en ce que** le terminal de transaction électronique comporte des moyens (20, 22, 24) pour transmettre au moins un élément d'identification prédéterminé du terminal et/ou utilisateur associé, à chaque communication.

12. Terminal (11) de transaction électronique selon la revendication 11, **caractérisé en qu'**il comporte des moyens (20, 22, 24) pour récupérer et transmettre au moins un élément d'identification prédéterminé d'un utilisateur du terminal de transaction électronique, de façon à initialiser une transaction, au travers du réseau personnel, avec le serveur d'application.

13. Terminal selon la revendication 12, dans lequel le terminal de transaction électronique comporte des moyens (28) de saisie, depuis l'extérieur, de données représentatives de l'élément d'identification prédéterminé d'un utilisateur du terminal de transaction électronique.

14. Terminal selon la revendication 12 ou 13, dans lequel le terminal de transaction électronique comporte, en outre, au moins un lecteur (210, 212, 214) à contact et/ou au moins un lecteur sans contact avec l'extérieur.

15. Terminal selon l'une des revendications 12 à 14, dans lequel le terminal de transaction électronique comporte des moyens (22) de mémorisation d'au moins un élément d'identification du terminal de transaction électronique.

16. Terminal selon l'une des revendications 12 à 14, dans lequel le terminal de transaction électronique comporte des moyens de saisie, depuis l'extérieur, de données représentatives d'au moins un élément d'identification du terminal de transaction électronique.

17. Terminal selon l'une des revendications 12 à 16, dans lequel les moyens pour communiquer, de manière locale, au travers d'un réseau personnel sont constitués par au moins une interface de communication sans contact et/ou au moins une interface de communication à contact.

18. Système (11, 12, 13) pour communiquer, depuis un terminal (11) de transaction électronique, en tant que client, avec au moins un serveur (13) d'application,
**caractérisé en ce qu'**il comprend un terminal de transaction électronique pour communiquer, en tant que client, à au moins un serveur d'application, le terminal de transaction électronique comportant des moyens (24) pour communiquer, de manière locale, au travers d'un réseau personnel, avec l'extérieur, le terminal de transaction électronique comportant des moyens (20, 22, 24) pour transmettre au moins un élément d'identification prédéterminé du terminal de transaction et/ou utilisateur associé, à chaque communication,
et **en ce que** le serveur d'application comporte des moyens pour recevoir ledit au moins un élément d'identification prédéterminé, de façon à initialiser une transaction avec le terminal de transaction électronique. et/ou gérer les communications dans le serveur (13).

19. Dispositif électronique comportant au moins un serveur (13) d'application, le serveur d'application comportant des moyens pour communiquer, de manière distante, avec l'extérieur,
**caractérisé en ce que** le serveur d'application comporte des moyens pour recevoir au moins un élément d'identification prédéterminé d'un terminal ou utilisateur d'un terminal de transaction électronique client, de façon à initialiser et/ou gérer une communication / transaction avec le terminal de transaction électronique client.

20. Dispositif selon la revendication 19, dans lequel le dispositif comporte des moyens de mémorisation mémorisant au moins un élément d'identification d'au moins un utilisateur d'un terminal de transaction électronique client.

21. Dispositif selon la revendication 19 ou 20, dans lequel le dispositif comporte des moyens de mémorisation mémorisant au moins un élément d'identification d'au moins un terminal de transaction électronique client.

22. Dispositif selon l'une des revendications 19 à 21, dans lequel le serveur d'application comporte des moyens d'association d'au moins un élément d'identification de l'utilisateur avec au moins un élément d'identification du terminal de transaction électronique.
